# EUROPEAN PATENT APPLICATION

(11) **EP 3 699 859 A1**
(43) Date of publication of application: **26.08.2020**
(21) Application number: 19209184.1
(22) Date of filing: 14.11.2019
(51) Int. Cl.: G06Q 30/06

(54) **PERSONALIZED VIRTUAL PAPER DOLL FOR ONLINE APPAREL**

(30) Priority: 22.02.2019 US 201916282446
(71) Applicant: Madsen-Schmid, Ketty Elizabeth, Toronto, Ontario M4C 4X1 (CA)
(72) Inventor: Madsen-Schmid, Ketty Elizabeth, Toronto, Ontario M4C 4X1 (CA)
(74) Representative: Gulde & Partner

(57) **Abstract**

A personalized web-based virtual paper doll for online apparel purchases system which includes in combination a web-based application adapted to receive input data via a communication network server, a modeling software, and a computer-generated paper doll body contour. The personalized web-based virtual paper doll for online apparel purchases system is modeling software configured to allow input, access, update and generate a plurality of customized numerical body and sizing measurements, and further has a computer-generated paper doll body contour allowing for visualization and accuracy of apparel fit according to personal customized body measurements.

## Description

### BACKGROUND OF THE INVENTION

The following includes information that may be useful in understanding the present disclosure. It is not an admission that any of the information provided herein is prior art nor material to the presently described or claimed inventions, nor that any publication or document that is specifically or implicitly referenced is prior art.

### TECHNICAL FIELD

The present invention relates generally to the field of data processing: financial, business practice, management, or cost/price determination, and apparel apparatus of existing art and more specifically relates to data processing: financial, business practice, management, or cost/price determination, and apparel apparatus including graphical representation of item or shopper, processing of requisition or purchase order, item configuration or customization, and forms.

### RELATED ART

Many consumers prefer the convenience of shopping online. Online shopping has become increasingly more popular than shopping in-store. Purchasing apparel online can be time-consuming and stressful to the consumer due to challenges the consumer may face with fit and proper sizing. Currently, a consumer visits an online apparel website and chooses sizing relative to body measurements according to the retailer's sizing chart. These sizing charts may not be accurate nor consistent with different items of clothing. Additionally, this presents the consumer with challenges because the retailer's sizing chart do not represent their own personal body measurements and a proper fit may not be easily acquired. The consumer then often needs to return such apparel items resulting in lost time and inconvenience. Consumers would largely benefit from having the ability to select apparel options specific and visually review those options on a virtual representation specific to their personalized body measurements prior to purchase. A suitable solution is desired.

U.S. Pub. No. 2012/0284148A1 to Gennady Volchek relates to a system and method of facilitating on line purchase of clothing. The described system and method of facilitating on line purchase of clothing includes a mannequin including a body which substantially resembles that of a human with an outer contour defined over at least part of the body by a plurality of devices that extend and/or retract relative to the body and a data interface operably connected to the plurality of devices such that they extend and/or retract to define a contour according to data received from the interface wherein the received data represents the outer physical dimensions of a customer.

### SUMMARY OF THE INVENTION

In view of the foregoing disadvantages inherent in the known data processing: financial, business practice, management, or cost/price determination, and apparel apparatus art, the present disclosure provides a novel personalized web-based virtual paper doll for online apparel purchases system. The general purpose of the present disclosure, which will be described subsequently in greater detail, is to provide visualization and accuracy of apparel fit according to personal customized body measurements.

A personalized web-based virtual paper doll for online apparel purchases system is disclosed herein. The personalized web-based virtual paper doll for online apparel purchases system comprises in combination a web-based application adapted to receive input data via a communication network server, a modeling software, and a computer-generated paper doll body contour. The personalized web-based virtual paper doll for online apparel purchases system comprises modeling software configured to allow input, access, update and generate a plurality of customized numerical body and sizing measurements, and further comprises a computer-generated paper doll body contour allowing for visualization and accuracy of apparel fit according to personal customized body measurements.

A method of use for the personalized web-based virtual paper doll for online apparel purchases is also disclosed herein comprising the steps of: providing a personalized web-based virtual paper doll for online apparel purchases system; capturing a plurality of customized, numerical measurements; uploading and transmitting a plurality of customized, numerical measurements; recording and storing a plurality of customized, numerical measurements to a personal profile of a customer; creating a personal profile and applying to the computer-generated paper doll body contour; selecting objects of apparel and accessories and applying to the computer-generated paper doll body contour; selecting a drag and drop feature of the personalized web-based virtual paper doll for online apparel purchases system and analyzing and comparing selected objects of apparel and accessories for purchase; and storing the selected objects of apparel and accessories to the personal profile of a customer. Based on use the customer can then purchase the selected goods.

For purposes of summarizing the invention, certain aspects, advantages, and novel features of the invention have been described herein. It is to be understood that not necessarily all such advantages may be achieved in accordance with any one particular embodiment of the invention. Thus, the invention may be embodied or carried out in a manner that achieves or optimizes one advantage or group of advantages as taught herein without necessarily achieving other advantages as may be taught or suggested herein. The features of the invention which are believed to be novel are particularly pointed out and distinctly claimed in the concluding portion of the specification. These and other features, aspects, and advantages of the present invention will become better understood with reference to the following drawings and detailed description.

### BRIEF DESCRIPTION OF THE DRAWINGS

The figures which accompany the written portion of this specification illustrate embodiments and methods of use for the present disclosure, a personalized web-based virtual paper doll for online apparel purchases system, constructed and operative according to the teachings of the present disclosure.
**FIG. 1** is a perspective view of the personalized web-based virtual paper doll for online apparel purchases system during an 'in-use' condition, according to an embodiment of the disclosure.
**FIG. 2** is a perspective view of the personalized web-based virtual paper doll for online apparel purchases system of **FIG. 1****,** according to an embodiment of the present disclosure.
**FIG. 3** is a perspective view of the personalized web-based virtual paper doll for online apparel purchases system of **FIG. 1****,** according to an embodiment of the present disclosure.
**FIG. 4** is a perspective view of the personalized web-based virtual paper doll for online apparel purchases system of **FIG. 1****,** according to an embodiment of the present disclosure.
**FIG. 5** is a flow diagram illustrating a method of use for the personalized web-based virtual paper doll for online apparel purchases system of FIG. 1, according to an embodiment of the present disclosure.

### DETAILED DESCRIPTION

As discussed above, embodiments of the present disclosure relate to a data processing: financial, business practice, management, or cost/price determination, and apparel apparatus including graphical representation of item or shopper, processing of requisition or purchase order, item configuration or customization, and forms, and more particularly to a personalized web-based virtual paper doll for online apparel purchases system as used to improve the visualization and accuracy of apparel fit according to personal customized body measurements such that purchases are reliable when received.

Generally speaking, the present invention provides an on-site visual 2-d representation of the user, known as a "paper doll" representation to work alongside or within a merchant website's product offerings and sizing charts. The system allows for: 1. overlaying/dragging an online representation of a select garment chosen according to the website's sizing information for the garment, onto a personalized paper doll generated according to the customer's body measurements: waist, height, inseam, outer, chest, arm length etc. 2. Overlaying multiple items to create partial or full outfits with accessories can be viewed, before purchase, by the customer - increasing sales to multiple items 3. The system is designed to reduce issues with conversion of sizes e.g. UK→US & brands individual size charts 4. reducing costly returns (to customers and merchants) of 'wrong fit' clothing. As designed the system functions to: 1. In cooperation witth a site's existing size charts the paper doll enables an instant view of the 'dragged' garment's fit by overlaying it on the paper doll 2. permits rapid and seamless 'trying on' different sizes - for a customized size choice 3. using the customer's measurements for the personalized visual paper doll enables the buyer to achieve 'tailor-made' outfits. The benefits of use comprise: l.the returns for 'wrong fit' are numerous, troublesome and costly for consumers and on-line sites using conventional means which is drastically reduced by the system of the present invention. 2.confidence by 'viewing' size for the desired fit over the myriad of existing 'size charts' that require measurement conversion, before purchasing clothing products from abroad and different suppliers becomes a realized benefit.

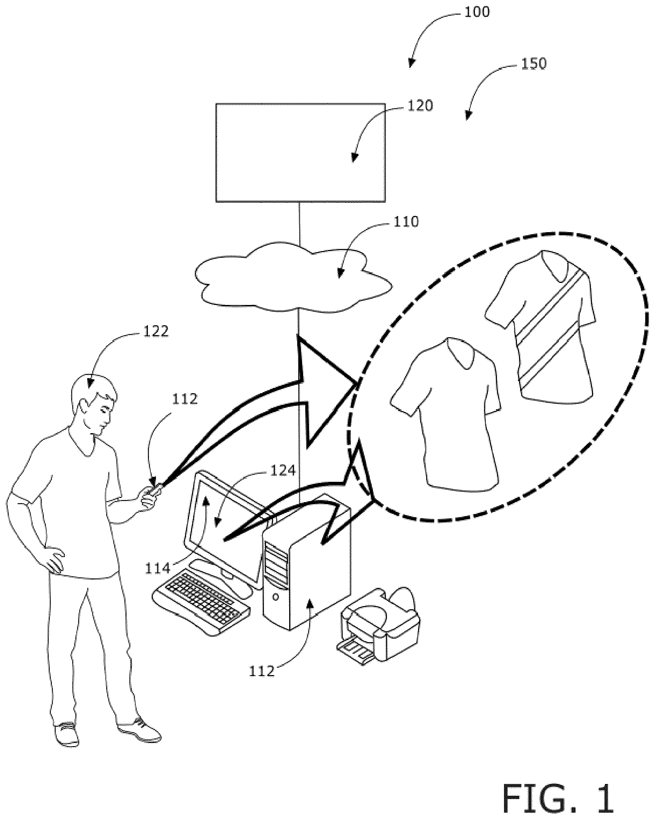

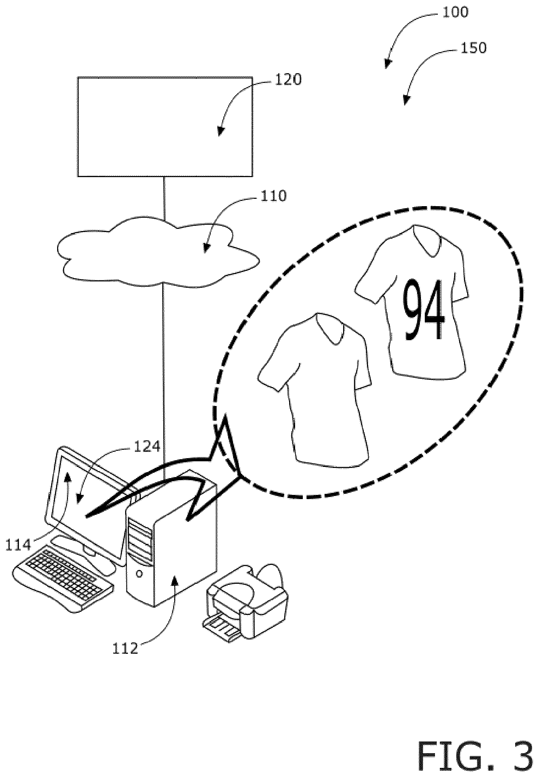

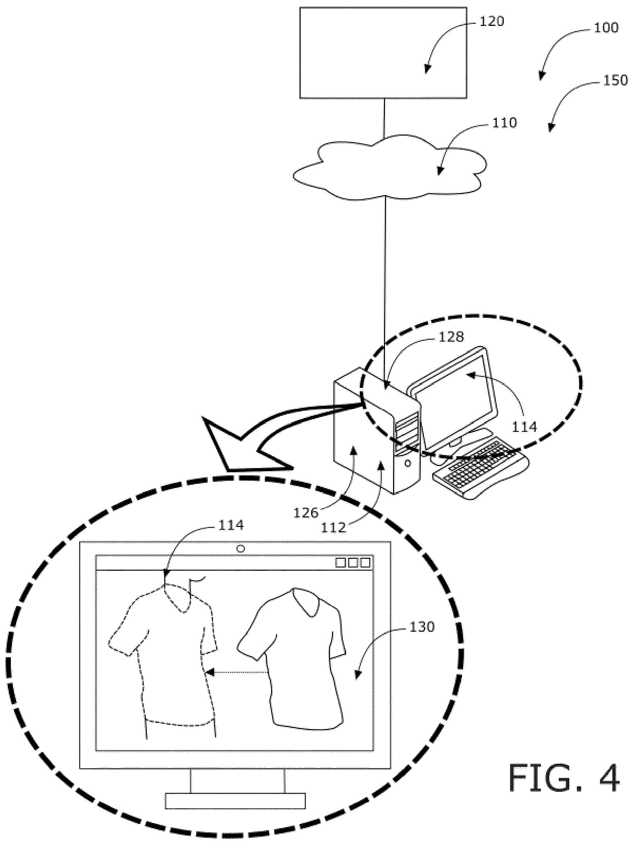

Referring now more specifically to the drawings by numerals of reference, there is shown in **FIGS. 1-5****,** various views of a personalized web-based virtual paper doll for online apparel purchases system **100.**

**FIG. 1** shows a personalized web-based virtual paper doll for online apparel purchases system **100** during an 'in-use' condition **150,** according to an embodiment of the present disclosure. Here, the personalized web-based virtual paper doll for online apparel purchases system **100** may be beneficial for use by a user to provide visualization and accuracy of apparel fit according to personal customized body measurements. As illustrated, the personalized web-based virtual paper doll for online apparel purchases system **100** may comprise: a web-based application adapted to receive input data via a communication network server **110,** a modeling software **112,** and a computer-generated paper doll body contour **114.** The personalized web-based virtual paper doll for online apparel purchases system **100** comprises modeling software **112** configured to allow input, access, update and generate a plurality of customized numerical body and sizing measurements, and further comprises a computer-generated paper doll body contour **112** allowing for visualization and accuracy of apparel fit according to personal customized body measurements. The body measurements used may include those common to fitting tops and bottoms: height, chest, waist, inseam, outseam, sleeve (arm) length. Other measurements may be including for fitting other garments and accessories, such as neck, head, wrist, hand, finger and feet.

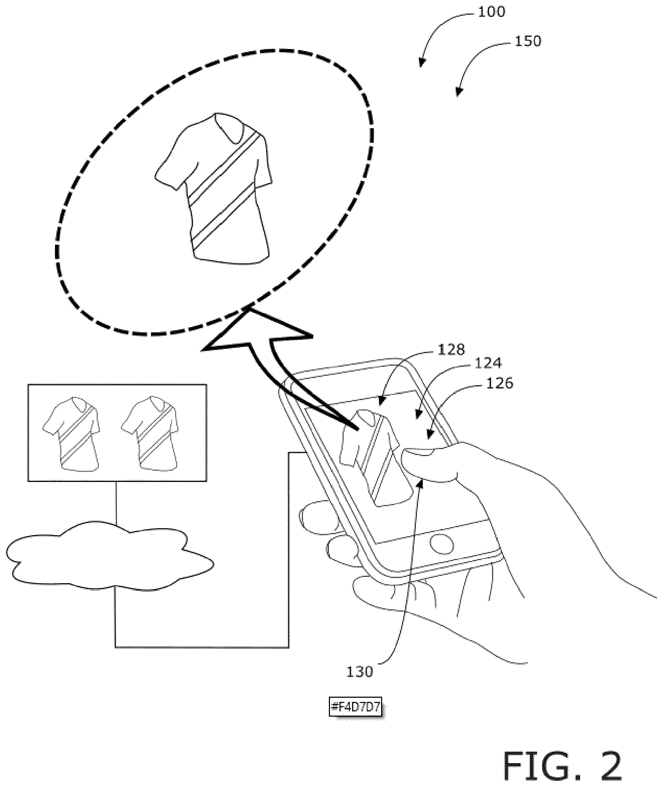

Referring now to **FIGS. 2-4** showing various views of the personalized web-based virtual paper doll for online apparel purchases system **100** of **FIG. 1****,** according to an embodiment of the present disclosure. The web-based application is adapted to receive input data via a communication network server **110** and provides data exchange means between an online apparel retailer **120** and a customer **122** while operating an electronic device **124.** The web-based application is adapted to receive input data via communication network server **110** by selecting objects of apparel and accessories and creating personal customized body measurements **126** for an online customer **122.** Additionally, the web-based application is adapted to receive input data via communication network server **110** and creates a personal profile **128** of an online customer **122** and personal customized body measurements **126** for precision-measured apparel. Further, the modeling software **112** of the web-based application is adapted to receive input data via communication network serve **110** and generates a plurality of customized, numerical measurements.

The personal profile **128** may be used to automatically produce or suggest apparel and accessories of the expect "proper" size according to the customized body measurements **126** and the known sizing information of the apparel and accessories. Known sizing information may be based on standard sizing (e.g. small/medium/large/etc. or numerical sizing), or on more specific size information as provided by the manufacturer or based on other collected data, such as photo scaling or rendering information. From this, there may also be provided a feedback system to adjust either or both of the customized body measurements **126** and the sizing information based on customer feedback on the actual fit.

The computer-generated paper doll body contour **114** simulates resemblance of a human body. Further, the computer-generated paper doll body contour **114** may be multi-dimensional. The computer-generated paper doll body contour **114** displays a plurality of selected apparel objects and combinations overlaid on the paper doll to reflect actual sizing and fit according to the input dimensions of the paper doll and the known sizing of the apparel objects, and a plurality of selected apparel objects and combinations specific to the input of customer measurements. As illustrated, the modeling software **112** of the web-based application is configured to receive input data via communication network server **110** provides an overlay drag and drop feature **130.** The overlay drag and drop **130** feature of the modeling software **112** provides a customer **122** with an ability to instantly view multiple options and choices for purchase simultaneously.

According to one embodiment, the personalized web-based virtual paper doll for online apparel purchases system **100** may be arranged as a kit. In particular, the personalized web-based virtual paper doll for online apparel purchases system **100** may further include a set of instructions. The instructions may detail functional relationships in relation to the structure of the personalized web-based virtual paper doll for online apparel purchases system **100** such that the personalized web-based virtual paper doll for online apparel purchases system **100** can be used, maintained, or the like, in a preferred manner.

As described above, the web application may be hosted on the merchant's website, and, if desired, integrated into the product display, the shopping cart, the search interface, or any other location and function of the website desired. The application paper doll display may be integrated into the existing website display, or provided as a separate window or page (e.g. a "pop-up"). Alternatively, the web application may be hosted on the client device and integrated as required when the user accesses a merchant website compatible with the application. Additionally, as understood herein, the merchant website and web application may be accessed from a computer, tablet, phone or any other fixed or mobile device that supports display and interaction with websites.

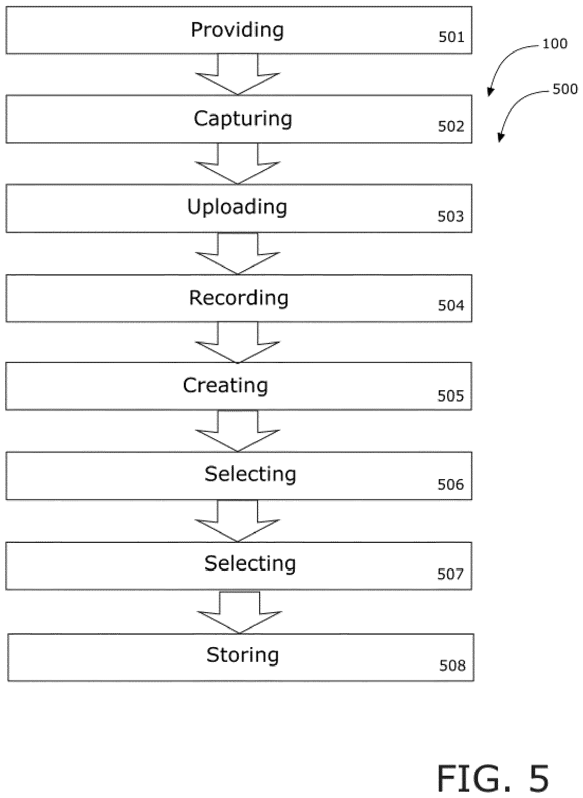

Referring now to **FIG. 5** showing a flow diagram illustrating a method of use **500** for the personalized web-based virtual paper doll for online apparel purchases system **100,** according to an embodiment of the present disclosure. In particular, the method of use **500** may include one or more components or features of the personalized web-based virtual paper doll for online apparel purchases system **100** as described above. As illustrated, the method of use **500** may include the steps of: step one **501,** providing a personalized web-based virtual paper doll for online apparel purchases system; step two **502,** capturing a plurality of customized, numerical measurements; step three **503,** uploading and transmitting a plurality of customized, numerical measurements; step four **504,** recording and storing a plurality of customized, numerical measurements to a personal profile of a customer; step five **505,** creating a personal profile and applying to the computer-generated paper doll body contour; step six **506,** selecting objects of apparel and accessories and applying to the computer-generated paper doll body contour; step seven **507,** selecting a drag and drop feature of the personalized web-based virtual paper doll for online apparel purchases system and analyzing and comparing selected objects of apparel and accessories for purchase; and step eight **508,** storing the selected objects of apparel and accessories to the personal profile of a customer.

The embodiments of the invention described herein are exemplary and numerous modifications, variations and rearrangements can be readily envisioned to achieve substantially equivalent results, all of which are intended to be embraced within the spirit and scope of the invention. Further, the purpose of the foregoing abstract is to enable the U.S. Patent and Trademark Office and the public generally, and especially the scientist, engineers and practitioners in the art who are not familiar with patent or legal terms or phraseology, to determine quickly from a cursory inspection the nature and essence of the technical disclosure of the application.

## Claims

1. A personalized web-based virtual paper doll for online apparel purchases system comprising:
a web-based application adapted to receive input data via a communication network server;
a modeling software; and
a computer-generated paper doll body representation of a body contour;
wherein said personalized web-based virtual paper doll for online apparel purchases system comprises in functional combination said web-based application adapted to receive input data via a communication network server and said modeling software and said computer-generated paper doll body contour;
wherein said personalized web-based virtual paper doll for online apparel purchases system comprises said modeling software configured to allow input, access, update and generate a plurality of customized numerical body and sizing measurements; and
wherein said personalized web-based virtual paper doll for online apparel purchases system comprises said computer-generated paper doll body contour to provide visualization and accuracy of apparel fit according to customized body measurements.

2. The personalized web-based virtual paper doll for online apparel purchases system of claim 1, wherein said web-based application is adapted to receive said input data via a communication network server that provides data exchange between an online apparel retailer and a customer while operating an electronic device.

3. The personalized web-based virtual paper doll for online apparel purchases system of claim 2, wherein said web-based application is adapted to receive said input data via said communication network server for selected objects of apparel and accessories.

4. The personalized web-based virtual paper doll for online apparel purchases system of claim 1, wherein said web-based application is adapted to receive said input data via a communication network server of personal body measurements for an online customer.

5. The personalized web-based virtual paper doll for online apparel purchases system of claim 4, wherein said web-based application is adapted to receive said input data via a communication network server of said personal body measurements.

6. The personalized web-based virtual paper doll for online apparel purchases system of claim 4, wherein said web-based application is adapted to receive said input data via said communication network server of said personal body measurements and creates a personal profile of said online customer.

7. The personalized web-based virtual paper doll for online apparel purchases system of claim 4, wherein said web-based application is adapted to receive said input data via said communication network server of said customer sizing and said personal body measurements for precision-measured apparel.

8. The personalized web-based virtual paper doll for online apparel purchases system of claim 1, wherein said modeling software of said web-based application adapted to receive said input data via said communication network server which generates a plurality of customized, numerical measurements.

9. The personalized web-based virtual paper doll for online apparel purchases system of claim 8, wherein said modeling software of said web-based application adapted to receive said input data via said communication network server which generates said plurality of customized, numerical measurements of said precision-measured apparel.

10. The personalized web-based virtual paper doll for online apparel purchases system of claim 1, wherein said computer-generated paper doll body contour simulates resemblance of a human body.

11. The personalized web-based virtual paper doll for online apparel purchases system of claim 1, wherein said computer-generated paper doll body contour is multi-dimensional.

12. The personalized web-based virtual paper doll for online apparel purchases system of claim 1, wherein said computer-generated paper doll body contour displays a plurality of selected apparel objects and combinations.

13. The personalized web-based virtual paper doll for online apparel purchases system of claim 12, wherein said computer-generated paper doll body contour displays said plurality of selected apparel objects and combinations specific to said input of customer measurements.

14. The personalized web-based virtual paper doll for online apparel purchases system of claim 1, wherein said modeling software of said web-based application is configured to receive said input data via said communication network server which provides an overlay drag and drop feature.

15. The personalized web-based virtual paper doll for online apparel purchases system of claim 14, wherein said overlay drag and drop feature of said modeling software provides instant visualization of proper sizing.

16. The personalized web-based virtual paper doll for online apparel purchases system of claim 14, wherein said overlay drag and drop feature of said modeling software effectively eliminates online size charts that require measurement conversion.

17. The personalized web-based virtual paper doll for online apparel purchases system of claim 14, wherein said overlay drag and drop feature of said modeling software provides a customer with the ability to instantly view multiple options and choices for purchase simultaneously.

18. The personalized web-based virtual paper doll for online apparel purchases system of claim 1, wherein said customized body measurements include a least two or more of: height, waist, inseam, outseam, chest, neck, arm, wrist, hand and foot.

19. A personalized web-based virtual paper doll for online apparel purchases system comprising:
a web-based application adapted to receive input data via a communication network server;
a modeling software; and
a computer-generated paper doll body contour;
wherein said personalized web-based virtual paper doll for online apparel purchases system comprises in combination said web-based application adapted to receive input data via a communication network server and said modeling software and said computer-generated paper doll body contour;
wherein said personalized web-based virtual paper doll for online apparel purchases system comprises said modeling software configured to allow input, access, update and generate a plurality of customized numerical body and sizing measurements;
wherein said personalized web-based virtual paper doll for online apparel purchases system comprises said computer-generated paper doll body contour to provide visualization and accuracy of apparel fit according to customized body measurements;
wherein said web-based application is adapted to receive said input data via a communication network server and provides data exchange means between an online apparel retailer and a customer while operating an electronic device;
wherein said web-based application is adapted to receive said input data via said communication network server for selected objects of apparel and accessories;
wherein said web-based application is adapted to receive said input data via said communication network server of said personal body measurements for an online said customer;
wherein said web-based application is adapted to receive said input data via said communication network server of said personal body measurements and creates a personal profile of said online customer;
wherein said web-based application is adapted to receive said input data via said communication network server of said customer sizing and said personal customized body measurements for precision-measured said apparel;
wherein said modeling software of said web-based application adapted to receive said input data via said communication network server which generates a plurality of said customized, numerical measurements;
wherein said computer-generated paper doll body contour simulates resemblance of a human body;
wherein said computer-generated paper doll body contour is multi-dimensional;
wherein said computer-generated paper doll body contour displays a plurality of selected apparel objects and combinations;
wherein said computer-generated paper doll body contour displays said plurality of selected apparel objects and combinations specific to said input of customer measurements;
wherein said modeling software of said web-based application is configured to receive said input data via said communication network server which provides an overlay drag and drop feature; and
wherein said overlay drag and drop feature of said modeling software provides said customer with an ability to instantly view multiple options and choices for purchase simultaneously.

20. A method of use for the personalized web-based virtual paper doll for online apparel purchases system comprising the steps of:
providing a personalized web-based virtual paper doll for the online apparel purchases system;
capturing a plurality of customized, numerical measurements;
uploading and transmitting a plurality of customized, numerical measurements;
recording and storing the plurality of customized, numerical measurements to a personal profile of a customer;
creating the personal profile and applying to the computer-generated paper doll body contour;
selecting objects of apparel and accessories and applying to the computer-generated paper doll body contour;
selecting a drag and drop feature of the personalized web-based virtual paper doll for online apparel purchases system and analyzing and comparing the selected objects of the apparel and the accessories for purchase; and
storing the selected objects of apparel and the accessories to the personal profile of the customer.
